# EUROPEAN PATENT APPLICATION

(11) **EP 4 080 421 A1**
(43) Date of publication of application: **26.10.2022**
(21) Application number: 22159565.5
(22) Date of filing: 01.03.2022
(51) Int. Cl.: G06N 20/20, G06N 5/00, G06N 3/08, G06N 20/10

(54) **SYSTEM AND METHOD FOR REASSIGNMENT CLUSTERING FOR DEFECT VISIBILITY REGRESSION**

(30) Priority: 23.04.2021 US 202163179117 P; 21.05.2021 US 202117327618
(71) Applicant: Samsung Display Co., Ltd., Yongin-si, Gyeonggi-do 17113 (KR)
(72) Inventor: LEE, Janghwan, Pleasanton, 94588-9661 (US); MUNN, Steven, Santa Clara, 95051 (US)
(74) Representative: Marks & Clerk LLP

(57) **Abstract**

A method of training a system for making predictions relating to products manufactured via a manufacturing process includes receiving a plurality of input vectors and a plurality of defect values corresponding to the plurality of input vectors, identifying a plurality of first cluster labels corresponding to the plurality of input vectors based on the defect values, training a cluster classifier based on the input vectors and the corresponding first cluster labels, reassigning the input vectors to a plurality of second cluster labels based on outputs of the cluster classifier, retraining the cluster classifier based on the input vectors and the second cluster labels, and training a plurality of machine learning models corresponding to the second cluster labels.

## Description

### FIELD

One or more aspects of embodiments according to the present disclosure relate machine learning systems for predicting manufacturing defect levels.

### BACKGROUND

The display industry has grown rapidly in recent years. As new types of display panel modules and production methods are deployed, and as product specifications tighten, it may be desirable to enhance equipment and quality-control methods to maintain production quality. For example, it may be desirable to have measures for detecting different levels of manufacturing defects. Accordingly, what is desired is a system and method for automatically predicting levels of manufacturing defects for making adjustments to the manufacturing process.

The above information disclosed in this Background section is only for enhancement of understanding of the background of the present disclosure, and therefore, it may contain information that does not form prior art.

### SUMMARY

Aspects of embodiment of the present disclosure are directed to a system and method for making predictions relating to products manufactured via a manufacturing process. In some embodiments, the system utilizes a cluster classifier for clustering manufacturing data into a plurality of clusters, each corresponding to a different modality of manufacturing data. The system also generates and applies a machine learning model for each of the clusters to make a prediction about defect visibility based on manufacturing data. In some embodiments, the system applies a cluster reassignment process to improve the prediction outcome of the system.

According to some embodiments, there is provided a method of training a system for making predictions relating to products manufactured via a manufacturing process, the method including: receiving, by a processor of the system, a plurality of input vectors and a plurality of defect values corresponding to the plurality of input vectors; identifying, by the processor, a plurality of first cluster labels corresponding to the plurality of input vectors based on the defect values; training, by the processor, a cluster classifier based on the input vectors and the corresponding first cluster labels; reassigning, by the processor, the input vectors to a plurality of second cluster labels based on outputs of the cluster classifier; retraining, by the processor, the cluster classifier based on the input vectors and the second cluster labels; and training, by the processor, a plurality of machine learning models corresponding to the second cluster labels.

In some embodiments, identifying the plurality of first cluster labels includes: for each input vector of the plurality of input vectors and a defect value of the plurality of defect values corresponding to the input vector, identifying a quantile of defect values corresponding to the defect value; and assigning the input vector to a cluster label of the plurality of first cluster labels based on the quantile of defect values.

In some embodiments, the input vectors include trace data from the manufacturing process.

In some embodiments, the trace data include multivariate sensor data from a plurality of sensors used in the manufacturing process.

In some embodiments, the defect values include defect visibility values of products of the manufacturing process corresponding to the trace data.

In some embodiments, the reassigning the input vectors to the plurality of second cluster labels includes: inputting the input vectors to the cluster classifier; receiving the plurality of second cluster labels from the cluster classifier as outputs in response to the inputting of the input vectors; and assigning the input vectors to corresponding ones of the plurality of second cluster labels.

In some embodiments, the method further includes: determining, by the processor, to reassign the input vectors to the plurality of second cluster labels by: maintaining a count of a number of input vector reassignments; determining that the count is less than or equal to a threshold; and determining to reassign the input vectors.

In some embodiments, the method further includes: determining, by the processor, to reassign the input vectors to the plurality of second cluster labels by: determining a reassigned number of input vectors for which corresponding ones of the first cluster labels differ from the corresponding ones of the second cluster labels; calculating a ratio of the reassigned number to a total number of input vectors; determining that the ratio is greater than a threshold; and determining to reassign the input vectors.

In some embodiments, the training the cluster classifier includes: inputting, by the processor, the input vectors and the corresponding first cluster labels as training data to the cluster classifier; and training, by the processor, the cluster classifier to identify the first cluster labels given the input vectors using a supervised machine learning algorithm.

In some embodiments, the retraining the cluster classifier includes: inputting, by the processor, the input vectors and the corresponding second cluster labels as training data to the cluster classifier; and training, by the processor, the cluster classifier to identify the second cluster labels given the input vectors using a supervised machine learning algorithm.

In some embodiments, the training the plurality of machine learning models includes: training one of the plurality of machine learning models based on ones of the input vectors within a same cluster label of the second cluster labels and corresponding ones of the defect values.

In some embodiments, a cluster label of the plurality of first cluster labels is different from a corresponding cluster label of the plurality of second cluster labels.

According to some embodiments, there is provided a method of training a prediction system for making predictions relating to products manufactured via a manufacturing process, the method including: receiving, by a processor of the prediction system, a plurality of input vectors and a plurality of defect values corresponding to the plurality of input vectors; identifying, by the processor, a plurality of first cluster labels corresponding to the plurality of input vectors based on the defect values; training, by the processor, a cluster classifier based on the input vectors and the corresponding first cluster labels; training, by the processor, a plurality of first machine learning models corresponding to the first cluster labels; reassigning the input vectors to a plurality of second cluster labels based on outputs of the cluster classifier; retraining the cluster classifier based on the input vectors and the second cluster labels; and training a plurality of second machine learning models corresponding to the second cluster labels.

In some embodiments, identifying the plurality of first cluster labels includes: for each input vector of the plurality of input vectors and a defect value of the plurality of defect values corresponding to the input vector, identifying a quantile of defect values corresponding to the defect value; and assigning the input vector to a cluster label of the plurality of first cluster labels based on the quantile of defect values.

In some embodiments, the input vectors include trace data from the manufacturing process, and the defect values include defect visibility values of products of the manufacturing process corresponding to the trace data.

In some embodiments, the training the plurality of first machine learning models includes: training one of the plurality of first machine learning models based on ones of the input vectors within a same cluster label of the first cluster labels and corresponding ones of the defect values.

In some embodiments, the method further includes: determining, by the processor, to reassign the input vectors to the plurality of second cluster labels by: maintaining a count of a number of input vector reassignments; determining that the count is less than or equal to a threshold; and determining to reassign the input vectors.

In some embodiments, the method further includes: determining, by the processor, to reassign the input vectors to the plurality of second cluster labels by: determining a mean percentage absolute error (MAPE) between the defect values and predicted defect values generated by the plurality of first machine learning models; determining that the MAPE is greater than a threshold; and determining to reassign the input vectors.

In some embodiments, the reassigning the input vectors to the plurality of second cluster labels includes: inputting the input vectors to the cluster classifier; receiving the plurality of second cluster labels from the cluster classifier as outputs in response to the inputting of the input vectors; and assigning the input vectors to corresponding ones of the plurality of second cluster labels.

According to some embodiments, there is provided a system for making predictions relating to products manufactured via a manufacturing process, the system including: a processor; and a memory, wherein the memory includes instructions that, when executed by the processor, cause the processor to perform: receiving a plurality of input vectors and a plurality of defect values corresponding to the plurality of input vectors; identifying a plurality of first cluster labels corresponding to the plurality of input vectors based on the defect values; training a cluster classifier based on the input vectors and the corresponding first cluster labels; reassigning the input vectors to a plurality of second cluster labels based on outputs of the cluster classifier; retraining the cluster classifier based on the input vectors and the second cluster labels; and training a plurality of machine learning models corresponding to the second cluster labels.

These and other features, aspects and advantages of the embodiments of the present disclosure will be more fully understood when considered with respect to the following detailed description, appended claims, and accompanying drawings. Of course, the actual scope of the invention is defined by the appended claims.

At least some of the above and other features of the invention are set out in the claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 illustrates a block diagram of an analysis system for making predictions relating to products manufactured via a manufacturing process, according to some embodiments of the present disclosure.
FIG. 2 illustrates a block diagram of the inference module of the analysis system, according to some embodiments of the present disclosure.
FIG. 3 is a flow diagram of a process executed by the training module of the analysis system for training a cluster classifier and for generating a plurality of machine learning models, according to some embodiments of the present disclosure.
FIG. 4 is a flow diagram of a process executed by the training module for training the cluster classifier and for generating the plurality of machine learning models, according to some embodiments of the present disclosure.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

A manufacturing process, such as a display manufacturing process, may acquire digital trace data during the manufacture of the display product. Although a display product is used as an example, a person of skill in the art should recognize that embodiments of the present disclosure may apply to manufacturing processes of other glass and non-glass products, including for example, the manufacturing of semiconductor wafer, display glass, Polyimide substrate, and/or the like.

Trace data may be collected via one or more sensors that may be placed, for example, on top of a conveyer belt that carries the product during production. The sensors may be configured to record a sensed activity as trace data. The sensors may be, for example, multiple temperature and pressure sensors configured to capture measurements of temperature and pressure in the manufacturing process, as a function of time. Each sensor may be sampled multiple times (e.g., every second or once every few seconds for monitoring each glass, over a period of multiple glass manufacturing time). Thus, trace data, means data acquired by monitoring or sampling, one or more sensor reading over time.

Trace data may be analyzed to understand conditions that lead to certain manufacturing defects. As manufacturing conditions change over time, the collected trace data, and relationships of the trace data to manufacturing defects, may also change. When machine learning is used to predict manufacturing defects based on input trace data, a model that is trained based on a previously understood relationship may no longer function to accurately predict defects if the relationship between trace data and manufacturing defects has changed due to changes in manufacturing conditions. Accordingly, it is desirable to have a system and method that uses machine learning to make predictions of manufacturing defects, where the system and method also take into account different/changing relationships between the trace data and the manufacturing defects in making the predictions.

In general terms, embodiments of the present disclosure are directed to analyzing trace data of a manufacturing process for predicting a degree/level of defect (also referred to as defect visibility level) of the manufacturing process. A defective manufacturing process may result in a defective/faulty manufacturing part. Identifying potential defects of the manufacturing process may help improve quality control of the process, reduce manufacturing costs, and/or improve equipment uptime.

In some embodiments, the trace data is generated by one or more sensors over time. The trace data is provided to an analysis system for predicting a defect visibility level. In some embodiments, the input trace data is provided by a plurality of the sensors as multivariate input data. In some examples, the input trace data may be augmented using statistical information of previously obtained trace data, and the augmented data may be provided to a cluster classifier for selecting a machine learning model (e.g. a regression model) from a plurality of models. The selected machine learning model may depend on a class/cluster label assigned by the classifier to the augmented data.

In some embodiments, the analysis system addresses varying manufacturing conditions that may result over time, which may create multiple single distributions (also referred to as multimodal distributions) of the input data (e.g. trace data) to the output data (e.g. defect visibility levels).

In one embodiment, the analysis system provides a tree-structured multimodal regressor design to help address the multimodal distributions of the data. In this regard, the analysis system may provide a plurality of machine learning models, where a first model is associated with a first cluster/modality (e.g. a first normal distribution) that may be identified by a first cluster label, and a second model is associated with a second cluster/modality (e.g. a second normal distribution) different from the first cluster/modality, that may be identified by a second cluster label. In some embodiments, the cluster classifier selects one of the plurality of machine learning models based on the cluster label that is predicted for the input data. Experiments show that the tree-structured multimodal regressor design that uses a plurality of regressors for predicting defect levels achieves a higher prediction accuracy than a model that uses a single regressor.

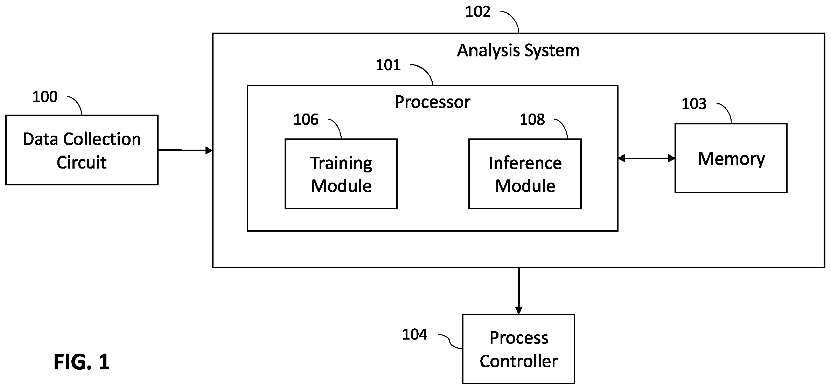

FIG. 1 illustrates a block diagram of a system for making predictions relating to products manufactured via a manufacturing process, according to some embodiments of the present disclosure.

Referring to FIG. 1, the system includes one or more data collection circuits 100, an analysis system 102, and one or more equipment/process controllers 104. The data collection circuits 100 may include, for example, sensors, amplifiers, and/or analog to digital converters, configured to collect trace data during a manufacturing process. The sensors may be placed, for example, on top of a conveyer belt that carries a product during production. The sensors may be configured to record any sensed activity as trace data. For example, the sensors may be multiple temperature and pressure sensors configured to capture measurements of temperature and pressure in the manufacturing process, as a function of time. Each sensor may be sampled multiple times (e.g., every second or a few seconds for monitoring each glass, over a period of multiple glass manufacturing time).

The analysis system 102 may include a training module 106 and an inference module 108. Although the training and inference modules 106 and 108 are illustrated as separate functional units in FIG. 1, a person of skill in the art will recognize that the functionality of the modules may be combined or integrated into a single module, or further subdivided into further sub-modules without departing from the scope of the invention. For example, in some implementations, the training module 106 corresponds to one or more processing units (also referred to as a processor) 101 and associated memory 103. The inference module 108 may correspond to the same one or more processing units as the training module 106 or to a different one or more processing units. Examples of processing units include a central processor unit (CPU), a graphics processor unit (GPU), an application specific integrated circuit (ASIC), a field programmable gate array (FPGA), etc.

The training module 106 may be configured to generate and train a plurality of machine learning models for use by the inference module 108. The plurality of machine learning models may be generated and trained based on training data provided by the data collection circuits 100. In some embodiments, the training module 106 uses a tree-structured multimodal regressor design in generating and training the plurality of machine learning models.

According to some embodiments, the training module 106 is also configured to train a cluster classifier to select one of the plurality of machine learning models based on the input data (e.g., trace data). In this regard, the plurality of machine learning models may be associated with different cluster labels. In some embodiments, the cluster classifier is trained to learn a relationship between trace data and the cluster labels, which is used to identify an appropriate machine learning model to apply during an inference stage.

The inference module 108 may be configured to predict a defect visibility level based on trace data provided by the data collection circuits 100 during the inference stage. In this regard, the inference module 108 may select a model from the plurality of trained machine learning models to make the prediction. The selection of the model may depend on the classification (i.e., the class/cluster label) of the received trace data. Different machine learning models may be invoked based on different classifications.

In some embodiments, the predicted defect visibility level is used for making an adjustment in the manufacturing process. For example, if the predicted defect visibility level is above a certain threshold level, a signal may be transmitted to the equipment/ process controller 104 for adjusting a parameter of a manufacturing equipment used for the manufacturing process. The adjusted parameter may be, for example, an operating speed or internal temperature of the manufacturing equipment. In some embodiments, the manufacturing equipment may be re-initialized or re-calibrated in response to detecting that the predicted defect visibility level is above the certain threshold level.

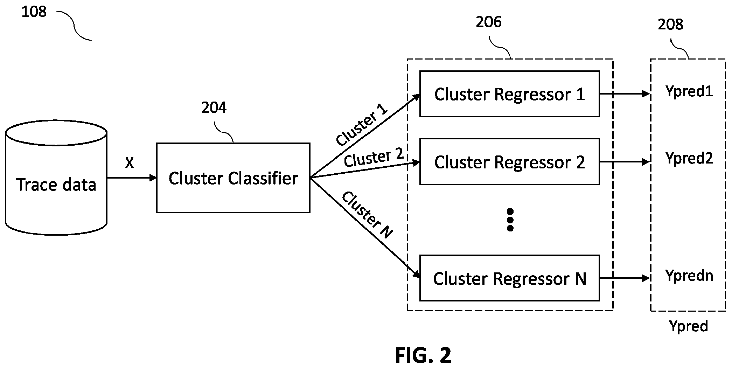

FIG. 2 illustrates a block diagram of the inference module 108, according to some embodiments of the present disclosure.

In some embodiments, the inference module 108 includes a cluster classifier engine (hereinafter, a cluster classifier) 204, and a plurality of machine learning models 206 (also referred to as cluster regressors).

In some embodiments, trace data is collected from the various sensors by the data collection circuits 100, and provided to the cluster classifier 204 as multivariate input data. In some examples, the inference module 108 may take the multivariate trace data and augment the trace data with statistical data. The statistical data may be, for example, a mean value computed from prior samples collected by the data collection circuits 100. The mean value may be concatenated to the collected trace data to produce an augmented dataset. The augmented dataset may be further processed by a scaling module. Because the range of values provided by the various sensors may vary widely depending on the type of sensor, the augmented dataset may be further scaled/normalized to produce a normalized dataset. The normalized dataset may then be fed to the cluster classifier 204. Hereinafter the input data X provided to the cluster classifier 204 may be trace data directly from the manufacturing process or processed trace data (e.g., augmented and/ normalized trace data) as noted above.

The cluster classifier 204 may be configured to run a machine learning algorithm such as, for example, random forest, extreme gradient boosting (XGBoost), support-vector machine (SVM), deep neural network (DNN), and/or the like. In one embodiment, the cluster classifier 204 is trained to predict a cluster label for the input data X. In this regard, the cluster classifier 204 may predict a cluster label from a plurality of preset cluster labels. The predicted cluster label may then be used to select a machine learning model from the plurality of machine learning models 206. The selected machine learning model generates a prediction of a defect visibility level 208 of a product manufactured via the manufacturing process.

In some embodiments, each machine learning model of the plurality of machine learning models 206 is associated with a different cluster/modality. Each cluster/modality may reflect certain manufacturing conditions that result in a particular distribution of trace data to predicted defect visibility levels. The use of multimodal machine learning models 206 for predicting defect visibility levels may allow the analysis system 102 to address changes in manufacturing conditions while providing a desired level of prediction accuracy. The use of multimodal machine learning models 206 may also help control model complexity and save computation power when compared to a system that uses a single model for making the predictions.

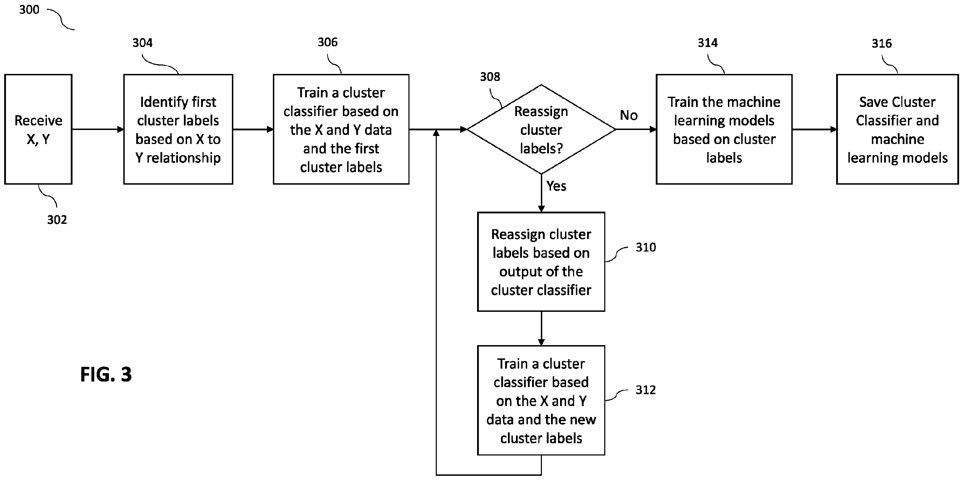

FIG. 3 is a flow diagram of a process 300 executed by the training module 106 for training the cluster classifier 204 and for generating the plurality of machine learning models 206, according to some embodiments of the present disclosure. It should be understood that the sequence of steps of the process is not fixed, but can be modified, changed in order, performed differently, performed sequentially, concurrently, or simultaneously, or altered into any desired sequence, as recognized by a person of skill in the art.

At block 302, the training module 106 receives the input training dataset that includes multivariate input data X and a plurality of defect values Y. The multivariate input data X may be in the form of a plurality of input vectors, and the plurality of defect values Y may be defect visibility levels each of which corresponds to one of the input vectors X. In some examples, each defect value Y may be a number within a predefined range (e.g., a real number between 1 to 100, where 1 indicates lowest defect visibility and 100 indicated highest defect visibility).

At block 304, the training module 106 identifies first cluster labels (e.g., initial cluster labels) corresponding to the plurality of input vectors X based on the defect values Y. The training module 106 may cluster the input vectors X based on their associated defect value quantiles. For example, ones of the input vectors X corresponding to the first quantile of the defect values Y may be labeled as cluster 1, those of the input vectors X corresponding to the second quantile of the defect values Y may be labeled as cluster 2, etc. In some examples, the cluster labels may be automatically generated numbers, for example, sequential numbers. The first cluster labels may serve as initial estimates of the assignment of input vectors X to clusters, and may not necessarily represent the optimal distribution or modalities of the relationship between the input vectors X and the defect levels Y.

As recognized by a person of ordinary skill in the art, embodiments of the present disclosure are not limited to the quantile-based initial assignment of clusters, and any suitable method may be used to identify clusters for the input vectors X based on their corresponding defect values Y.

At block 306, the training module 106 trains the cluster classifier 204 based on the input vectors X and the corresponding first clusters (e.g., Cluster 1, Cluster 2, etc.) to learn the relationship between the input vectors X and the associated cluster labels. The training of the cluster classifier 204 may be done via a supervised machine learning algorithm such as, for example, a classification algorithm.

At block 308, the training module 106 determines whether to reassign the input vectors X to a second set of cluster labels. When a determination is made to reassign the input vectors X, at block 310, the training module 106 reassigns the input vectors X to the second cluster labels based on the classifications of the cluster classifier 204 when provided with the input vector X. For example, when the first cluster label for a first input vector is Cluster 1, but the cluster classifier 204 classifies it as Cluster 2, the training module 106 may reassign the first input vector to Cluster 2. Here, despite training the cluster classifier 204 with the input vectors X and the previous cluster labels (e.g., the first cluster labels), the cluster classifier 204 may not produce exactly the first cluster labels at its output when inputted with the first cluster labels. Thus, as the second cluster labels are the outputs of the cluster classifier 204 when provided with the input vectors X, each one of the second cluster labels may be the same as or different from a corresponding one of the first cluster labels.

At block 312, the training module 106 retrains the cluster classifier 204 based on the input vectors X and the second cluster labels. The retraining of the cluster classifier 204 may be done via a supervised machine learning algorithm such as, for example, a classification algorithm. This process then loops back to block 308 where the training module 106 reassesses whether to reassign the input vectors X to different cluster labels. When a determination is made not to reassign the input vectors X, the training module 106 trains a machine learning model for each of the cluster labels at block 314. In so doing, the training module 106 uses the subset of the input vectors X corresponding to a particular cluster label and the associated subset of the defect values Y to generate a machine learning model 206 corresponding to that particular cluster label.

According to some embodiments, in determining whether to reassign the input vectors X to new clusters, the training module 106 maintains a count of the number of times the input vectors X have been reassigned. The training module 106 continues to reassign the input vectors X while the count is less than or equal to a first threshold (e.g., 100). According to some embodiments, the first threshold is greater than one. Once the count reaches the first threshold, the training module 106 ceases to reassign the input vectors X. Thus, in some embodiments, the training module 106 may retrain the cluster classifier 204 a number of times equal to the first threshold (e.g., 100 times). In some embodiments, the training module 106 determines whether to reassign the input vectors X to different clusters by comparing a ratio of the number of the input vectors X to be reassigned to a total number of the input vectors X with a second threshold. The training module 106 continues to reassign the input vectors X while the ratio is greater than the second threshold, and ceases reassignment when the ratio reaches or drops below the second threshold (e.g., 1%). In other words, in some embodiments, the training module 106 retrains the cluster classifier 204 when the ratio of the difference in the numbers of the first and second cluster labels to the total number of input vectors (or the total number of labels in the first/second cluster labels) is greater than the second threshold. By iteratively reassigning the input vectors X from the previously assigned cluster labels to ones that the cluster classifier 204 predicts them to belong to, the cluster labels produced by the cluster classifier 204 eventually settle (or get close to settling) to particular values that are more representative of the actual clusters/modalities of the relationships between the input vectors X and the defect values Y. This allows for enhanced regression modeling by the training module 106 at block 314, which may lead to improved prediction results.

According to some embodiments, the process executed by the training module 106 for generating the plurality of machine learning models 206 may be described as a tree algorithm that iteratively segments the input training dataset (i.e., the input vectors X, defect values Y, and the cluster labels) and, depending on the error analysis, either labels the segmented dataset with a label (by traversing to a left sub-branch of the tree), or applies one or more new intermediate baseline regressors (e.g. intermediate regressors during a first iteration of the process, or intermediate regressors during a second iteration of the process) to perform the error analysis again (by traversing to right sub-branches of the tree). In one embodiment, the depth of the tree may be limited (e.g. to be the total number cluster labels determined by the training module 106) for limiting implementation complexity. The process of generating the plurality of machine learning models 206 is described in further detail in U.S. Application No. 17/127,778, filed December 18, 2020, entitled "SYSTEM AND METHOD FOR PERFORMING TREE-BASED MULTIMODAL REGRESSION,".

However, embodiments of the present disclosure are not limited thereto, and any suitable algorithm for generating the machine learning models 206 based on input vectors X, defect values Y, and the cluster labels may be utilized.

At block 316, the processor 101 saves the trained cluster classifier 204 and the plurality of machine learning models 206 for later use by the inference module 108.

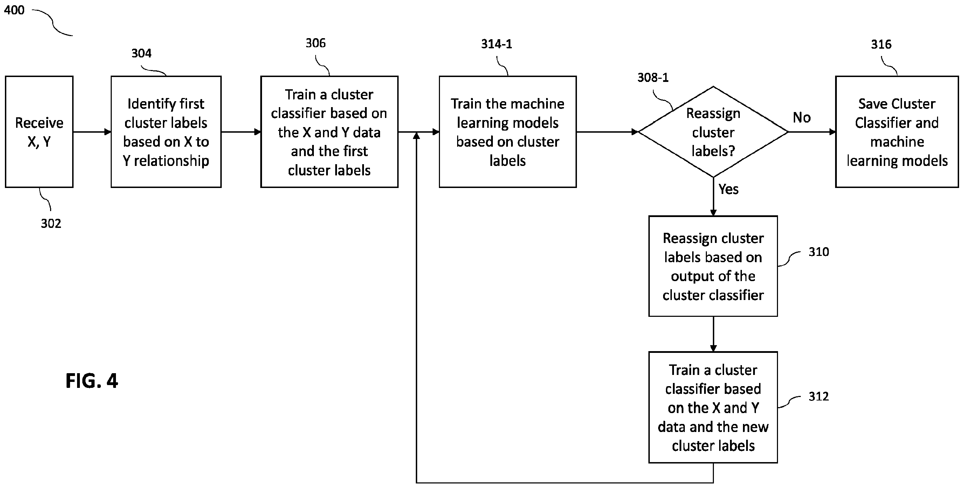

FIG. 4 is a flow diagram of a process 400 executed by the training module 106 for training the cluster classifier 204 and for generating the plurality of machine learning models 206, according to some embodiments of the present disclosure. The process 400 is substantially the same as process of FIG. 3, except for block 314-1 and block 308-1. For purposes of clarity of description, those elements that are common between processes 300 and 400 (of FIGS. 3 and 4) may not be repeated here.

Referring to FIG. 4, in some embodiments, the training module 106 trains a machine learning model for each of the cluster labels (at block 314-1) before checking whether to reassign cluster labels (at block 308-1). In so doing, the training module 106 generates a machine learning model for each of the first cluster labels. That is, the training module 106 uses the subset of input vectors X corresponding to a particular one of the first cluster labels and the associated subset of defect values Y to generate a machine learning model 206 corresponding to that particular one of the first cluster labels. Otherwise, the process of generating the machine learning models may be the same as that described above with respect to FIG. 3, and so a detailed description thereof may not be repeated here.

According to some embodiments, in determining whether to reassign the input vectors X to different clusters (at block 308-1), the training module 106 maintains a count of the number of times the input vectors X have been reassigned. The training module 106 continues to reassign the input vectors X while the count is less than or equal to a first threshold (e.g., 100). According to some embodiments, the first threshold is greater than one. Once the count reaches the first threshold, the training module 106 ceases to reassign the input vectors X. In some embodiments, the training module 106 determines whether to reassign the input vectors X to different clusters by first determining a mean percentage absolute error (MAPE) between defect values Y and the predicted defect values Ypred from the plurality of machine learning models 206. When the MAPE, which represents regression error, is greater than a second threshold, the training module 106 determines to reassign the input vectors X, and ceases reassignment when the MAPE is at or below the second threshold. Thus, the input vectors X are continually reassigned to different clusters until the regression error drops to a desired level (i.e., the second threshold). In some examples, the second threshold may be about 1% (error).

As compared to the initial assignment of the input vectors X to clusters, the iterative reassignment approach achieves a more optimal distribution allowing the inference module 108 to make better predictions about defect visibility. As shown in Table 1 below, in some examples, the iterative reassignment provides improved (e.g., smaller) mean percentage absolute error (MAPE), and thus more accurate defect visibility predictions, as compared to input vector X clustering methods (such as mixture of Gaussians method) of the related art:

| **Error (MAPE)** | **X-Clustering*** | **Iterative Cluster Reassignment** |
|---|---|---|
| Dataset 1 | 8.08% | 5.79% |
| Dataset 2 | 3.63% | 2.49% |

Accordingly, as described above, in some embodiments, the analysis system 102 clusters the multi-variate input data according to manufacturing conditions they occurred in so as to use a better-fitted model for the final regression. In some embodiments, the analysis system 102 finds a more optimal distribution of vectors across the different clusters due to (1) clustering in the input-output space and (2) reassigning difficult-to-classify input vectors X among the different clusters iteratively until the system settles or is close to settling to appropriate clustering that enables improved defect visibility prediction capability.

In some embodiments, the various modules and engines described above are implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the invention.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". As used herein, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Although embodiments of a system and method for detecting manufacturing defect levels have been specifically described and illustrated herein, many modifications and variations will be apparent to those skilled in the art. Accordingly, it is to be understood that a system and method for detecting manufacturing defect levels constructed according to principles of this disclosure may be embodied other than as specifically described herein.

## Claims

1. A method of training a system for making predictions relating to products manufactured via a manufacturing process, the method comprising:
receiving, by a processor of the system, a plurality of input vectors and a plurality of defect values corresponding to the plurality of input vectors;
identifying, by the processor, a plurality of first cluster labels corresponding to the plurality of input vectors based on the defect values;
training, by the processor, a cluster classifier based on the input vectors and the corresponding first cluster labels;
reassigning, by the processor, the input vectors to a plurality of second cluster labels based on outputs of the cluster classifier;
retraining, by the processor, the cluster classifier based on the input vectors and the second cluster labels; and
training, by the processor, a plurality of machine learning models corresponding to the second cluster labels.

2. The method of claim 1, wherein the identifying the plurality of first cluster labels comprises:
for each input vector of the plurality of input vectors and a defect value of the plurality of defect values corresponding to the input vector,
identifying a quantile of defect values corresponding to the defect value; and assigning the input vector to a cluster label of the plurality of first cluster labels based on the quantile of defect values.

3. The method of claim 1 or 2, wherein the input vectors comprise trace data from the manufacturing process.

4. The method of claim 3, wherein the trace data comprise multivariate sensor data from a plurality of sensors used in the manufacturing process.

5. The method of claim 3 or 4, wherein the defect values comprise defect visibility values of products of the manufacturing process corresponding to the trace data.

6. The method of any one of claims 1 to 5, wherein the reassigning the input vectors to the plurality of second cluster labels comprises:
inputting the input vectors to the cluster classifier;
receiving the plurality of second cluster labels from the cluster classifier as outputs in response to the inputting of the input vectors; and
assigning the input vectors to corresponding ones of the plurality of second cluster labels.

7. The method of any one of claims 1 to 6, further comprising:
determining, by the processor, to reassign the input vectors to the plurality of second cluster labels by:
maintaining a count of a number of input vector reassignments;
determining that the count is less than or equal to a threshold; and
determining to reassign the input vectors.

8. The method of any one of claims 1 to 7, further comprising:
determining, by the processor, to reassign the input vectors to the plurality of second cluster labels by:
determining a reassigned number of input vectors for which corresponding ones of the first cluster labels differ from the corresponding ones of the second cluster labels;
calculating a ratio of the reassigned number to a total number of the input vectors;
determining that the ratio is greater than a threshold; and
determining to reassign the input vectors.

9. The method of any one of claims 1 to 8, wherein the training the cluster classifier comprises:
inputting, by the processor, the input vectors and the corresponding first cluster labels as training data to the cluster classifier; and
training, by the processor, the cluster classifier to identify the first cluster labels given to the input vectors using a supervised machine learning algorithm.

10. The method of any one of claims 1 to 9, wherein the retraining the cluster classifier comprises:
inputting, by the processor, the input vectors and the corresponding second cluster labels as training data to the cluster classifier; and
training, by the processor, the cluster classifier to identify the second cluster labels given the input vectors using a supervised machine learning algorithm.

11. The method of any one of claims 1 to 10, wherein the training the plurality of machine learning models comprises:
training one of the plurality of machine learning models based on ones of the input vectors within a same cluster label of the second cluster labels and corresponding ones of the defect values.

12. The method of any one of claims 1 to 11, wherein a cluster label of the plurality of first cluster labels is different from a corresponding cluster label of the plurality of second cluster labels.

13. A method of training a prediction system as claimed in any one of claims 1 to 12 and further comprising:
training, by the processor, a plurality of first machine learning models corresponding to the first cluster labels;
wherein the step of training a plurality of machine learning models corresponding to the second cluster labels comprises training second machine learning modules.

14. The method of claim 13, wherein the training the plurality of first machine learning models comprises:
training one of the plurality of first machine learning models based on ones of the input vectors within a same cluster label of the first cluster labels and corresponding ones of the defect values.

15. The method of claim 13 or 14, further comprising:
determining, by the processor, to reassign the input vectors to the plurality of second cluster labels by:
determining a mean percentage absolute error (MAPE) between the defect values and predicted defect values generated by the plurality of first machine learning models;
determining that the MAPE is greater than a threshold; and
determining to reassign the input vectors.

16. The method of claim 13, 14 or 15, wherein the reassigning the input vectors to the plurality of second cluster labels comprises:
inputting the input vectors to the cluster classifier;
receiving the plurality of second cluster labels from the cluster classifier as outputs in response to the inputting of the input vectors; and
assigning the input vectors to corresponding ones of the plurality of second cluster labels.

17. A system for making predictions relating to products manufactured via a manufacturing process, the system comprising:
a processor; and
a memory, wherein the memory includes instructions that, when executed by the processor, cause the processor to perform the method of any one previous claim.
